# EUROPEAN PATENT SPECIFICATION

(11) **EP 1 680 277 B1**
(45) Date of publication and mention of the grant of the patent: **11.02.2009**
(21) Application number: 04822232.7
(22) Date of filing: 07.10.2004
(51) Int. Cl.: B32B 27/32, B32B 27/30, B60R 13/04

(54) **THERMOFORMABLE MULTI-LAYER SHEET**
THERMOVERFORMBARE MEHRSCHICHTIGE FOLIE
FEUILLE MULTICOUCHE THERMOFORMABLE

(30) Priority: 07.10.2003 US 509178 P
(43) Date of publication of application: 19.07.2006
(73) Proprietor: E.I. DU PONT DE NEMOURS AND COMPANY, Wilmington, DE 19898 (US)
(72) Inventor: VOGEL, Randall, Allen, Wilmington, DE 198 (US); PAUL, John, W., Beaumont, TX 77706 (US); HAUSMANN, Karlheinz, CH-2012 Auvernier (CH)
(74) Representative: Morf, Jan Stefan
(86) International application number: PCT/US2004/033440
(87) International publication number: WO 2006/038906

(56) References cited:
- EP-A1- 1 092 532
- WO-A-01/78981
- WO-A-01/78981
- WO-A-02/078954

## Description

### BACKGROUND OF THE INVENTION

This invention is directed to a thermoformable sheet that has improved properties such as higher temperature use and improved scratch resistance and can be useful for automotive, truck, recreational, lawn and garden vehicles for body panels and other parts.

It is desirable in the decorative body panel manufacturing industry for sheet materials that can be formed to the contour of parts, such as auto and truck fascia parts, injection cladded to provide stiffness and handleability and that have an acceptable finish that does not require additional painting or the application of an additional coating. It would be desirable, for example, to have a thermoformable multi-layer structure of a clear top layer/a pigmented layer/an adhesive layer/a backing layer that could be injection cladded with materials, such as, TPO (thermoplastic polyolefin), a polyester, a polyamide, BEXLOY^{®} W or other engineering resins, to produce door panels, hoods, fascia parts, such as bumpers or other automotive or truck parts, without requiring additional painting or finishing of the injection cladded part beyond trimming of the part.

WO 02/066249 discloses co-extruded pigment/clear coated polymeric coatings for articles such as automotive exterior body panels. JP Application SHO 58[1983}-155953 discloses molded polyolefin resin laminates for exterior automotive and truck panels and parts. In addition, weather durability of a pigmented surface layer would be expected to be significantly inferior to a clear layer over a colored layer. WO 01/78981 discloses multi-layer sheets comprising a first co-extruded layer consisting essentially of an ionomer which, however, does not represent an ionomer resin having a Vicat temperature of at least 70 °C and being prepared by a low temperature/high reactor pressure reaction.

There is a need for a sheet material that can be thermoformed and injection cladded, with surface properties of higher temperature resistance and improved scratch, scuff and mar resistance, is durable and weatherable and can be used for the exterior of automobiles and trucks without the application of additional finishes or coatings.

### SUMMARY OF THE INVENTION

This invention comprises a thermoformable multi-layer sheet as defined in claim 1 comprising or produced from a first polymeric layer comprising an ionomer resin; a second polymeric layer; a third polymeric adhesive layer; and a fourth co-extruded backing layer adhered to the adhesive layer.

### DETAILED DESCRIPTION OF THE INVENTION

The multi-layer sheet can comprise, or be produced from,
a. a first layer comprising a crystalline ionomer resin of a copolymer of ethylene and 8-25% by weight, based on the weight of the copolymer, of a C₃-C₈ α,β ethylenically unsaturated monocarboxylic acid at least 35% neutralized with metal ions, said ionomer resin having a Vicat temperature of at least 70°C and a Melt Index of less than 5 and further wherein the ionomer resin of the first layer is formed by (1) low reaction temperature of 220 to 260°C, (2) high reactor pressure of 179.2 to 193.1 MPa (26000 to 28000 psi), or (3) a combination of low reaction temperature and high reactor pressure;
b. a second co-extruded layer comprising an ionomer resin, an ethylene acid copolymer, an ethylene acid terpolymer, or a metallocene-catalyzed very low density polyethylene and comprising one or more of pigments, dyes and flakes;
c. optionally a third adhesive layer in direct contact with the second co-extruded layer and comprising an ethylene acid copolymer, an ethylene acid terpolymer, an ethylene copolymer, or a metallocene-catalyzed very low density polyethylene; and
d. optionally a fourth co-extruded backing layer adhered to the adhesive layer.

The invention can also comprise components that are formed or produced from the multi-layer sheet in which the multi-layer sheet is thermoformed and cladded with any of a group of engineering polymers, such as TPO (thermoplastic polyolefin), blends of ionomer resins and polyethylene, polyesters such as polyethylene terephthalate, and blends of polyethylene terephthalate and polybutylene terephthalate to form an auto or truck part or panel, parts for recreational vehicles and the like.

"(Meth)acrylic acid" means acrylic acid and methacrylic acid and the term "(meth)acrylate means acrylate and methacrylate.

"Distinctness of Image" or "DOI" is a measure of the "degree of definition" of a reflection of an object in a colored finish compared to the actual object itself. DOI is defined in ASTM Standard-284 as: distinctness-of-image-gloss, n-aspect of gloss characterized by the sharpness of images of objects produced by reflection at a surface. DOI can be measured with a BYK-Gardner Wavescan DOI instrument. In the automotive industry, satisfactory finishes on a smooth or "Class A" surface typically will have a DOI value of at least 60 and preferably, 80 or higher.

"Gloss" is defined in ASTM Standard-284 as, n-angular selectivity of reflectance, involving surface reflected light, responsible for the degree to which reflected highlights or images of objects may be superimposed on a surface.

"Vicat temperature" of a polymer is determined according to ASTM D 1525-70 Rate B.

"Melt Index" (MI) of a polymer is determined by ASTM D 1238 using condition E (2190g, 190°C).

"Haze" is defined in ASTM Standard-284 as: n-scattering of light at the glossy surface of a specimen responsible for the apparent reduction in contrast of objects viewed by reflection from the surface.

"Class A surface" is a surface that by itself has a DOI and gloss reading of at least 80 and 90.

The first layer or co-extruded clear layer comprises an ionomer resin that is manufactured to have higher crystallinity than a typical ionomer, and is a copolymer of ethylene and a co-monomer with the co-monomer content being between 8-25% by weight, based on the weight of the copolymer, of a C₃-C₈ α,β ethylenically unsaturated mono-carboxylic acid with at least 35% of the acid groups neutralized with metal ions and having a Vicat temperature of at least 70 °C and a Melt Index of less than 5. This layer is clear but may contain pigments that are transparent or have the same refractive index as the ionomer resin making the layer appear clear and may contain one or more UV absorbers and stabilizers and other additives and mixtures thereof, if it is exposed to UV light and weather. The molded auto and truck parts of the multi-layer sheet material of this invention have a first clear layer that is scratch and mar resistant with higher temperature resistance and weatherability and usually contains UV light stabilizers and absorbers.

The second layer or co-extruded polymeric layer is a colored or pigmented layer comprising pigments, dyes, flakes, such as aluminum flake, other additives and mixtures thereof. An ionomer resin can be used for this pigmented layer. The ionomer resin used in the clear and pigmented layers preferably is the same resin or a very compatible ionomer resin for the second layer and has good inter-layer adhesion. If two different resins are used in the clear layer and the pigmented layer, the resins are preferably compatible in processing and have adequate inter-layer adhesion. Other resins that can be used are ethylene acid copolymers, such as ethylene/acrylic acid and ethylene/methacrylic acid copolymers; ethylene copolymers, ethylene/acid terpolymers, such as ethylene/vinyl acetate/acrylic acid polymers, ethylene/(meth)acrylic acid/alkyl(meth)acrylate polymers having 2-12 carbon atoms in the alkyl group, like, ethylene/acrylic acid/butyl acrylate polymers. A metallocene catalyzed very low density polyethylene (m-VLDPE) can be used. One particularly suitable m-VLDPE is EXACT® 8201, an octane ethylene copolymer having a density of 0.88g/cm³ made by Exxon Mobil Corporation. Also, ethylene/vinyl acetate copolymers can be used.

The third co-extruded polymeric layer that can be in contact with the second colored layer can be an adhesive layer that bonds the colored layer to the backing layer. Typically useful polymers for this adhesive layer are one of the aforementioned ethylene/acid copolymers, ethylene/acid terpolymers, ethylene copolymers, ethylene/(meth)acrylic acid/alkyl (meth)acrylate polymers, and metallocene catalyzed very low density polyethylene (m-VLDPE). Particularly useful are the metallocene catalyzed very low density polyethylene (m-VLDPE) polymers since they provide a high level of adhesion. EXACT® 8201, described above, is one preferred polymer.

The optional fourth co-extruded layer can be any of a variety of engineering polymers to provide stiffness and rigidity to the sheet so that it can be thermoformed. Typical are polypropylene (a TPO -thermoplastic polyolefin), polyesters, polyamides, Bexloy^{®} W- a blend of ionomer resin and polyethylene. Adhesive layers usually need to be tailored for the specific backing layer, such as the m-VLDPE which provides high adhesion between an ionomer layer (second layer) and a polypropylene copolymer backing layer (fourth layer).

The sheet material of this invention can have an 80-450 µ thick first polymeric clear layer, 80-600 µ thick second polymeric pigmented layer and 40-500 µ thick third adhesive layer and a 200-800 µ thick fourth layer with a total thickness of about 400-1600 µ. In forming a part, the novel sheet material is thermoformed and then cladded with a relatively thick layer of an engineering polymer to provide the resulting part with the desired stiffness and handling ability. Typically, the cladding layer may be 800-4000 µ thick depending on the design of the part or panel which may be for autos, trucks, garden equipment and the like.

The first polymeric layer is an ionomer resin which is prepared using a low autoclave reaction temperature and/or higher pressure reactor conditions and when neutralized with metal ions, in particular zinc, sodium, magnesium and any mixtures thereof forms a surface layer that has improved scratch and mar resistance and temperature resistance in comparison to ionomers prepared using conventional processes. These manufacturing conditions increase the linear alkane polyethylene like fraction crystallinity and provide higher temperature transitions, such as Vicat temperature, which is at least 70°C and preferably, 75 to 98°C, increased melting temperatures and a desired MI (Melt Index). Typically ionomers can have an acid mole content above 0.7%, neutralization of the acid functional groups to a level greater than 40% and a MI (Melt Index) of less than 5 and preferably in the range of 0.4-4.0.

lonomers manufactured in a high pressure well stirred autoclave reactor are usually made under conditions which provide high productivity and are controlled to where the solubility of the reaction solution is well within the solubility parameters required to prevent polymer phase separation. The reactions temperature and pressure ranges to meet the above criteria are reaction temperatures of 220°C to 260°C and reaction pressures of 179.2 to 193.1 MPa (26,000 to 28,000 psi). To increase end use temperature of the ionomer resin, the level of linear alkane fraction crystallinity in the polymer can be increased that will raise transition temperatures, such as Vicat temperature, and melting temperature. It is known to those skilled in the art that ionomers can be made at lower reactor temperatures than 220°C, or at higher pressures than 193.1 MPa (28,000 psi) to prepare ionomers having different levels of crystallinity that may be required for various end uses.

The ionomers can be derived from direct copolymers of ethylene and a C₃-C₈ α,β ethylenically unsaturated mono-carboxylic acid (ethylene acid copolymer) that is at least 35% neutralized with metal ions. By "direct copolymer", it is meant that the copolymer is made by polymerization of monomers together at the same time, as distinct from a "graft copolymer" where a monomer is attached or polymerized onto an existing polymer chain. Methods of preparing such ionomers are well known and are described in US 3,264,272. Preparation of the direct ethylene-acid copolymers on which the ionomers a re based is described in US 4,351,931. Ethylene-acid copolymers with high levels of acid are difficult to prepare in a continuous polymerization because of monomer-polymer phase separation. This difficulty can be avoided however by use of "cosolvent technology" as described in US 5,028,674 or by employing higher pressures than those at which copolymers with lower acid can be prepared.

The ethylene-acid copolymers used to make the ionomeric copolymer of this invention are copolymers of ethylene and C₃-C₈ α,β ethylenically unsaturated mono-carboxylic acid, particularly acrylic or methacrylic acid. Preferred ethylene-acid copolymers are ethylene/acrylic acid and ethylene/methacrylic acid.

The ethylene-acid copolymers used to make the ionomer copolymers can have an acid moiety present in a high amount, depending on which acid moiety is employed, particularly the molecular weight of the acid moiety. In the case of ethylene/(meth)acrylic acid, the acid level can be 10 to 25, or 12 to 20, or 12 to 18 wt % based on the weight of the copolymer. Particularly in view of the disclosures herein, one skilled in the art can determine the "high" acid levels for other acid moieties to get the desired gloss levels and abrasion resistance. For example, useful acid copolymer include ethylene/12.5% acrylic acid and ethylene/15% methacrylic acid. Generally, if the acid level of the copolymer is increased, transition temperatures are lowered, such as Vicat temperature, while the available acid moieties for neutralizing increase. Higher levels of neutralization (acid level times neutralization extent) can improve hardness and mar resistance. A proper balance of acid level is preferred to balance surface mar and temperature resistance.

The neutralizing moiety can be metal cations such as monovalent and/or bivalent metal cations. Preferred metal cations include sodium, zinc, lithium, magnesium and calcium or a combination of such cations. A combination of zinc and sodium is most preferred. The preferred level of neutralization can depend on the ethylene-acid copolymers employed and the properties desired. Neutralization can raise the scratch/mar resistance and hardness to satisfactory levels. The percent neutralization of the acid groups can be 35% or greater. The level of acid and the degree of neutralization can be adjusted to achieve the particular properties desired. Higher neutralization can yield harder, products while more moderate neutralization yields tougher products.

The ionomer may also contain components such as, ultraviolet (UV) light stabilizers, UV absorbers, antioxidants and thermal stabilizers, clear pigments, fillers, anti-slip agents, plasticizers, nucleating agents, and the like. Preferably, these components are present in amounts of about 0.5 to about 3.0 (preferably, about 1.0 to about 2.0) parts per hundred parts by weight of the ionomer but may be present in lower or higher levels.

The second co-extruded polymeric layer is a colored or pigmented layer containing one or more of pigments, dyes, flakes, such as aluminum flake, and other additives. An ionomer resin can be used for this pigmented layer. The ionomer resin used in the pigmented layer can be any of those described above for the first clear layer and preferably, the same resin or a very processing compatible ionomer resin is used to insure that there is good inter-layer adhesion between the first and second layers.

If two different resins are used in the clear layer and the pigmented layer, the resins are preferably compatible in processing and have adequate inter-layer adhesion. Other resins that can be used for this pigmented layer are ethylene acid copolymers, such as ethylene/acrylic acid and ethylene methacrylic acid copolymers; ethylene/acid terpolymers, such as ethylene/vinyl acetate/acrylic acid polymers, ethylene/(meth)acrylic acid/alkyl(meth)acrylate polymers having 2-12 carbon atoms in the alkyl group, like ethylene/acrylic acid/butyl acrylate polymers. A metallocene catalyzed very low density polyethylene (m-VLDPE) can be used. Also, ethylene/vinyl acetate polymers can be used. The polymer used in this layer must be processible not only with the clear layer but with the subsequently applied adhesive layer.

The third co-extruded polymeric layer can provide adhesion to the second pigmented co-extruded polymeric layer and to the backing layer and can be tailored to a specific system desired. Useful polymers can be one of the ethylene/acid copolymers, ethylene/acid terpolymers, ethylene copolymers, ethylene/(meth)acrylic acid/alkyl (meth)acrylate polymers, and metallocene catalyzed very low density polyethylene (m-VLD PE). Particularly useful are the metallocene catalyzed very low density polyethylene (m-VLDPE) polymers since they provide a high level of adhesion between an ionomer layer and a polypropylene layer especially a random copolymer of polypropylene.

The metallocene catalyzed very low density polyethylenes (m-VLDPE) are made using conditions well known in the art for continuous polymerization. Typically polymerization temperatures of 0-250°C and pressures from atmospheric to 1000 atmospheres (110 MPa) are used. Suspension, solution, slurry, gas phase or other polymerization methods can be used. A support for the catalyst can be used but preferably the catalysts are used in a homogeneous (soluble) manner. Suitable process conditions and catalysts that can be used to form the metallocene catalyzed polyethylenes used in this invention are disclosed in US 5,324,800, US 5,278,272, US 5,272, 236, US 5,405,922 and US 5,198,401. Preferred m-VLDPE can have a density of 0.86 to 0.91 g/cm³ and a MI of 0.5-4.0 g/10 min measured in accordance with ASTM D1238 such as, for example, m-VLDPE is EXACT^{®} 8021 disclosed above.

The fourth co-extruded polymeric material can be any of a variety of polymers that provide the necessary backing stiffness and properties required to which the third polymeric layer will adhere. Typically useful are TPO (thermoplastic polyolefin), polypropylene, BEXLOY® W-ethylene/ionomer resin, polypropylene random polymers, polyethylene terephthalate copolymers, PETG, blends of polyethylene terephthalate and polybutylene terephthalate, polyamides, and polyamide copolymers and the like can be used.

Additives normally compounded into plastics or added to coating compositions may be included in the first and second co-extruded polymeric layer as required for the end use of the resulting product that is formed, i.e., automotive or truck part. These requirements and the additives needed to meet these requirements are well known to those skilled in the art. Typical of the materials that are needed are, for example, UV absorbers, UV hindered amine light stabilizers, antioxidants and thermal stabilizers, processing aids, pigments and the like. When included, these components are preferably present in amounts of about 0.5 to about 3.0 (preferably about 1.0 to about 2.0) parts per hundred parts by weight of the polymeric material but may be present in lower or higher amounts.

If the part is to be exposed to ultraviolet (UV) light, one or more UV stabilizers and/or absorbers are preferably included. Typical UV stabilizers are hindered amine light stabilizers, such as bis(1,2,2,6,6 pentamethyl-4-piperidinyl sebacate) and di[4(2,2,6,6,tetramethyl piperidinyl)]sebacate, poly[[6-[1,1,3,3-tetramethylbutyl]amino-s-triazine-2,4-diyl][(2,2,6,6-tetramethyl-4-piperidyl)imino] hexamethylene[(2,2,6,6-tetramethyl-4-piperidyl)iminol]], Chimassorb^{®} 2020 1,6-hexanediamine, N,N'-bis(2,2,6,6-tetramethyl 1-4-piperidyl)-, polymer with 2,4,6-trichloro-1,3,5-triazine, reaction products with N-butyl-1-butanamine and N-butyl-2,2,6,6-tetramethyl-4-piperidinamine, Tinuvin^{®} NOR 371, a triazine derivative and any mixtures thereof.

Typically useful UV absorbers include: benzophenones such as hydroxy dodecyloxy benzophenone, 2,4-dihydroxybenzophenone, hydroxybenzophenones containing sulfonic groups and the like; triazoles such as 2-phenyl-4-(2',2'-dihydroxylbenzoyl)-triazoles; substituted benzothiazoles such as hydroxyphenylthiazoles and the like; triazines such as 3,5-dialkyl-4-hydroxyphenyl derivatives of triazine, sulfur containing derivatives of dialkyl-4-hydroxy phenyl triazines, hydroxy phenyl-1,3,5-triazine and the like; benzoates such as dibenzoate of diphenylol propane, tertiary butyl benzoate of diphenylol propane and the like; and others such as lower alkyl thiomethylene containing phenols, substituted benzenes such as 1,3-bis-(2'-hydroxybenzoyl)benzene, metal derivatives of 3,5-di-t-butyl-4-hydroxy phenyl proprionic acid, asymmetrical oxalic acid, diarylarides, alkylhydroxy-phenyl-thioalkanoic acid ester, and hindered amines of bipiperidyl derivatives.

Preferred UV absorbers and hindered amine light stabilizers, all available from Ciba Geigy, are TINUVIN^{®}.234 (2-(2H-benzotriazol-2-yl)-4,6-bis(1-methyl-1-phenylethyl)phenol), TINUVIN^{®} 327 (2-(3',5'-di-tert-butyl-2'-hydroxyphenyl)-5 chlorobenzotriazole), TINUVIN^{®} 328 (2-(2'hydroxy-3',5'-di-tert-amylphenyl)benzotriazole), TINUVIN^{®} 329 (2-(2'-hydroxy-5'-tert-octylphenyl)benzotriazole), TINUVIN^{®} 765 (bis(1,2,2,6,6-pentamethyl-4-piperidinyl)sebacate), TINUVIN^{®} 770 (bis(2,2,6,6-tetramethyl-4-piperidinyl) decanedioate), and CHIMASSORB^{®} 944 (N,N-bis(2,2,6,6-tetramethyl-4-piperidinyl)-1,6-hexanediamine polymer with 2,4,6-trichloro-1,3,5-triazine and 2,4,4-trimethyl-1,2-pentanamine.

Thermal stabilizers, all available from Ciba Geigy, include IRGANOX^{®} 259 (hexamethylene bis(3,5-di-tert-butyl-4-hydroxyhydrocinnamate), IRGANOX^{®} 1010 (3,5-bis(1,1-dimethylethyl)-4-hyroxybenzenepropanoic acid, 2,2-bis»3->3,5-bis(1,1-dimethylethyl)-4-hydroxyphenyl-1-oxopropoxymethyl 1,3-propanediyl ester), IRGANOX^{®} 1076 (octadecyl 3,5-di-tert-butyl-4-hydroxyhydrocinnamate), iragnox^{®} 1098 (N,N-hexamethylene bis(3,5-di-tert-butyl-4-hydroxyhydrocinnamamide), IRGANOX^{®} B215 (33/67 blend of IRGANOX^{®} 1010 with tris(2,4-di-tert-butylphenyl)phosphite), IRGANOX^{®} B225 (50/50 blend of IRGANOX^{®} 1010 with tris(2,4-di-tert-butylphenyl)phosphite), and IRGANOX^{®} B1171 (50/50 blend of IRGANOX^{®} 1098 with tris(2,4-di-tert-butylphenyl)phosphite).

Pigments include both clear pigments, such as inorganic siliceous pigments (silica pigments for example) and conventional pigments. Conventional pigments include metallic oxides such as titanium dioxide, and iron oxide; metal hydroxides; metal flakes such as aluminum flake; chromates such as lead chromate; sulfides; sulfates; carbonates; carbon black; silica; talc; china clay; phthalocyanine blues and greens, organo reds; organo maroons and other organic pigments and dyes. Particularly preferred are pigments that are stable at high temperatures. Pigments are generally formulated into a millbase by mixing the pigments with a dispersing resin that may be the same as or compatible with the material into which the pigment is to be incorporated. Pigment dispersions are formed by conventional means such as sand grinding, ball milling, attritor grinding or two-roll milling. Other additives, while not generally needed or used, such as fiber glass and mineral fillers, anti-slip agents, plasticizers, nucleating agents, and the like, can be incorporated.

In the formation of a part or panel from the multi-layer sheet material, a cladding material can be any of the aforementioned materials used in the fourth layer provide the materials are processible and provide a high level of adhesion. Useful cladding materials can include TPO, polyethylene terephthalate, polyamides, filled counterparts of these materials and other high modulus resins conventionally used in the manufacture of parts and panels for autos, trucks and recreational vehicles.

The sheet material can be made using melt co- extrusion processes known to those skilled in the art. For example, the sheet material is formed by charging each of the polymer components for the various layers of the sheet material into separate extruders and melting the component and pumping the melted component through a pipe into a feed block that layers the different flows together just prior to entering an extrusion die manifold as a single flow stream. A molten curtain of multiple layers exits the extrusion die and is deposited onto a moving roll which transfers the cooling multi-layer sheet material into a counter rotating moving roll through a gap or nip and then typically to a third cooling roller and subsequently through a take-off system to another nip between two rollers which pulls the sheet to a take-off system. The above arrangement provides a consistent finish to the sheet that has high gloss and forms a sheet having an uniform thickness.

Alternate processes can be employed to form the sheet. As above, the different layers of the sheet can be pumped into a feedblock to combine the layers prior to flowing into an extrusion die. In this case, the die can service an extrusion blow molding operation where a tube is formed from the circular die and the molten multi-layered tube is injected with a gas while encapsulated in a forming tool to form a contoured shape.

Parts formed with the sheet material with the addition of standard UV stabilizers and other additives can be weatherable and stabile when exposed to ultraviolet light for extended periods of time. These parts exhibit the low color shift, measured using, for example, the CIE 1976 (CIE LAB) color scale, needed for molded parts used in exterior applications. They exhibit AE color shift values of less than about 3 (a level considered as suitable for exterior automotive applications) when exposed to 2500 kilojoules/square meter in a Xenon-arc weatherometer (SAE J1960). Improved automobile fascia having DOI of at least 80 and superior mar resistance can be made.

Nano scratch testing is used to characterize the surface properties of the novel multi-layer sheet material of this invention and the testing equipment is described in US Patent 6,520,004. The nano scratch test utilizes a micro indentor to penetrate and scratch the surface to be characterized along with recording applied force and depth and length of penetration. Fracture resistance is a variabie utiiized to characterize surfaces. Fracture resistance is the normal force applied when surface fracture occurs. Fracture resistance is a key parameter since surface fracture results in a more noticeable mar to the untrained person. A higher fracture resistance indicates a higher force is necessary to fracture the surface with the indentor.

### EXAMPLES

The following examples illustrate, not limit the scope of, the invention. All parts and percentages are on a weight basis unless otherwise indicated.

Multi-layer sheets of the examples were made on extrusion lines that had 2 or 4 extruders. The co-extruder line used was configured with a co-extrusion feed block for the purpose of combining the flows into contacting layers. Alternatively, the individual flows could be filtered with a fine mesh flat screen filter or a depth filter media element prior to entering the feed block. The flows were routed within the feed block so as to combine the layers prior to exiting the feed block and going into a coat hanger type extrusion die. The combined layers exiting the die flow as a molten curtain onto a metal roller just prior to a second highly polished counter-rotating roll forming a nip with the first roll. The sheet contacts the highly polished surface for approximately ½ of its circumference prior to releasing the solidifying plastic to a third roll in the take-off roller system. The sheet is subsequently taken through another nip system between rollers, which pulls the sheet in the system. The sheet is subsequently rolled onto a core creating a roll of sheet or cut to length and stacked. The resulting sheet structure has a 3-5 mil (76-127 µ) thick clear layer/ 8-11 mil (203-279 µ) thick pigmented layer. This above clear layer pigmented layer sheet was formed for the purposes of the following test.

To form the novel sheet material of this invention a 2-4 mil (51-102 µ) thick adhesive layer/11-15 mil (203-381 µ) backing layer are co-extruded with the above clear layer and pigmented layer. The resulting overall sheet structure is approximately 30 mils (760 µ) thick.

The following resins were used for the clear and the pigmented layers in a 2 layer co-extrusion structure:
S 9910 (Surlyn^{®} 9910) - 15% acrylic acid/ethylene copolymer, zinc metal neutralized to a Melt Index of about 0.7 and having a Vicat Temperature of 62°C and a melt temperature of 84°C.
S9910 (amethyst) - same polymer and contained pigments to provide an amethyst color.
S 8920 (Surlyn^{®} 8920) - 15% acrylic acid/ethylene copolymer sodium metal neutralized to a Melt Index of about 0.9 and having a Vicat Temperature of 58°C and a melt temperature of 84°C.
S 8920 (amethyst) - same polymer and contained pigments to provide an amethyst color.
SEP699-1 & SEP1068-1: 12.5% acrylic acid/ethylene copolymer neutralized with sodium metal to a Melt Index of 1 and a Vicat Temperature of 75-80°C and made under low reaction temperature conditions.
SEP 1068-2 - 12.5% acrylic acid/ethylene copolymer, same as above, except neutralized with Zn/Na in a 75/25 weight ratio to a Melt Index of 1 and a Vicat Temperature of 75-80°C.

### EXAMPLE 1

The following ten clear layer/pigmented layer sheet structures where prepared as described above and tested for Fracture Resistance and the results are shown in Table 1 below.

**Table 1**

| Sheet | Clear Layer | Pigmented Layer | Fracture Resistance (mN) |
|---|---|---|---|
| (621-6) | S 8920* | S 8920 (amethyst) | 7.0 |
| 501-4 | S 9910* | S9910 (amethyst) | 17.8 |
| 605-2 | S 9910* | S9910 (amethyst) | 16.3 |
| 621-1 | S 9910* | 9910 unpigmented | 14.5 |
| 621-5 | S 9910* | S 8920 (amethyst) | 16.5 |
| 621-2 | SEP1068-1 | S 9910 unpigmented | 8.8 |
| 621-3 | SEP 1068-1 | S9910 (amethyst) | 14.3 |
| 501-5 | SEP 699-1 | S 9910 (amethyst) | 16.0 |
| 621-4 | SEP 1068-2 | S 9910 (amethyst) | 27.0 |
| 621-4 | SEP 1068-2 | S 9910 (amethyst) | 24.3 |

| | | | |
|---|---|---|---|
| * not in accordance with claimed invention | | | |

Table 1 shows that the clear layer of low reaction temperature and mixed ion neutralized ionomer (SEP 1068-2) has significantly higher fracture resistance. A much higher normal force was necessary to cause fracture in this layer. Fracture is important since it causes a more noticeable mar defect in surface appearance. S9910 clear layer has a medium fracture energy. It should be noted that the clear layer of ionomer SEP 1068-1, which is neutralized with sodium ions, had a lower fracture resistance than SEP 1068-2 (neutralized with a blend of Na/Zn). S 8920 was the lowest performing material and had a low fracture resistance.

## Claims

1. A thermoformable multi-layer sheet comprising, or produced from,
a. a first layer comprising a crystalline ionomer resin of a copolymer of ethylene and 8-25% by weight, based on the weight of the copolymer, of a C₃-C₈ α,β ethylenically unsaturated monocarboxylic acid at least 35% neutralized with metal ions, said ionomer resin having a Vicat temperature of at least 70°C and a Melt Index of less than 5 and further wherein the ionomer resin of the first layer is formed by (1) low reaction temperature of 220 to 260°C, (2) high reactor pressure of 179.2 to 193.1 MPa (26000 to 28000 psi) or (3) a combination of low reaction temperature of 220 to 260°C and high reactor pressure of 179.2 to 193.1 MPa (26 000 to 28 000 psi);
b. a second co-extruded layer comprising an ionomer resin, an ethylene acid copolymer, an ethylene acid terpolymer, or a metallocene-catalyzed very low density polyethylene and comprising one or more of pigments, dyes and flakes;
c. optionally a third adhesive layer in direct contact with the second co-extruded layer and comprising an ethylene acid copolymer, an ethylene acid terpolymer, an ethylene copolymer, or a metallocene-catalyzed very low density polyethylene; and
d. optionally a fourth co-extruded backing layer adhered to the adhesive layer.

2. The sheet of claim 1 wherein the second layer comprises an ethylene acid copolymer; processible with the ionomer resin of the first layer and further comprising one or more of pigments, dyes and flakes.

3. The sheet of claim 1, 2, wherein the third layer comprises (1) an ionomer resin; (2) an ethylene acid copolymer; (3) an ethylene acid terpolymer; or (4) a metallocene-catalyzed very low density polyethylene.

4. The sheet of claim 3 wherein the first layer is a clear layer and consists essentially of an ionomer resin of ethylene and 12-18% by weight, based on the weight of the copolymer, of methacrylic acid or 10-15% by weight, based on the weight of the copolymer, of acrylic acid and 35-75% neutralized with metallic ion comprising zinc, sodium, or magnesium; the second layer consists essentially of said ionomer resin neutralized with metal ions and contains one or more of pigments, dyes and flakes; the third layer comprises a metallocene-catalyzed very low density polyethylene adhered to a backing layer; and the fourth layer comprises a random copolymer of polypropylene.

5. A product comprising, or produced from, a multi-layer sheet wherein the product comprises an auto part, a truck part, an auto or truck body panel, or a part or panel of a recreational vehicle having a Class A surface **characterised by** a DOI of at least 80, as defined in ASTM Standard-284, and wherein the sheet is as recited in any of the preceding claims.

## Patentansprüche

1. Thermoformbare mehrschichtige Folie mit oder hergestellt aus:
a. einer ersten Schicht, die ein kristallines Ionomerharz aus einem Copolymer von Ethylen und 8-25 Gew.-%, bezogen auf das Gewicht des Copolymers, einer a,β-ethylenisch ungesättigten C₃-C₈-Monocarbonsäure aufweist, die zu mindestens 35% mit Metallionen neutralisiert ist, wobei das Ionomerharz eine Vicat-Temperatur von mindestens 70°C und einen Schmelzindex von weniger als 5 aufweist; und wobei ferner das Ionomerharz der ersten Schicht durch (1) eine niedrige Reaktionstemperatur von 220 bis 260°C, (2) einen hohen Druck in der Reaktionskammer von 179,2 bis 193,1 MPa (26000 bis 28000 psi) oder (3) eine Kombination aus niedriger Temperatur von 220 bis 260°C und hohem Druck in der Reaktionskammer von 179,2 bis 193,1 MPa (26000 bis 28000 psi) gebildet wird;
b. einer zweiten, koextrudierten Schicht, die ein Ionomerharz, ein Ethylen-Säure-Copolymer, ein Ethylen-Säure-Terpolymer oder ein metallocen-katalysiertes Polyethylen sehr niedriger Dichte aufweist und ein oder mehrere Pigmente, Farbstoffe und Flocken aufweist; und
c. wahlweise einer dritten Klebstoffschicht, die sich in direktem Kontakt mit der zweiten koextrudierten Schicht befindet und ein Ethylen-Säure-Copolymer, ein Ethylen-Säure-Terpolymer, ein Ethylen-Copolymer oder ein metallocen-katalysiertes Polyethylen sehr niedriger Dichte aufweist; und
d. wahlweise einer vierten, koextrudierten Rückschicht, die mit der Klebstoffschicht verklebt ist.

2. Folie nach Anspruch 1, wobei die zweite Schicht ein Ethylen-Säure-Copolymer aufweist, das mit dem Ionomerharz der ersten Schicht verarbeitbar ist und ferner ein oder mehrere Pigmente, Farbstoffe und Flocken aufweist.

3. Folie nach Anspruch 1, 2, wobei die dritte Schicht (1) ein Ionomerharz; (2) ein Ethylen-Säure-Copolymer; (3) ein Ethylen-Säure-Terpolymer; oder (4) ein metallocen-katalysiertes Polyethylen sehr niedriger Dichte aufweist.

4. Folie nach Anspruch 3, wobei die erste Schicht eine durchsichtige Schicht ist und im wesentlichen aus einem Ionomerharz von Ethylen und 12-18 Gew.-%, bezogen auf das Gewicht des Copolymers, Methacrylsäure oder 10-15 Gew.-%, bezogen auf das Gewicht des Copolymers, Acrylsäure besteht und zu 35-75% mit Metallionen neutralisiert ist, die Zink, Natrium oder Magnesium aufweisen; wobei die zweite Schicht im wesentlichen aus dem mit Metallionen neutralisierten Ionomerharz besteht und ein oder mehrere Pigmente, Farbstoffe und Flocken enthält ; wobei die dritte Schicht ein metallocen-katalysiertes Polyethylen sehr niedriger Dichte aufweist, das mit einer Rückschicht verklebt ist; und wobei die vierte Schicht ferner ein statistisches Copolymer von Polypropylen aufweist.

5. Produkt mit oder hergestellt aus einer mehrschichtigen Folie, wobei das Produkt ein Pkw-Teil, ein Lkw-Teil, ein Pkw- oder Lkw-Karosserieblech oder ein Teil oder eine Verkleidung eines Freizeitfahrzeugs mit einer Oberfläche der Klasse A aufweist, **gekennzeichnet durch** einen DOI-Wert von mindestens 80, wie im ASTM-Standard 284 definiert, und wobei die Folie den Angaben nach irgendeinem der vorstehenden Ansprüche entspricht.

## Revendications

1. Feuille multicouches thermoformable comprenant ou produite à partir de :
a. une première couche comprenant une résine ionomère cristalline d'un copolymère d'éthylène et 8 à 25% en poids, sur la base du poids du copolymère, d'un acide monocarboxylique α,β-éthyléniquement insaturé en C₃-C₈, au moins à 35% neutralisé avec des ions métalliques, ladite résine ionomère ayant une température Vicat d'au moins 70°C et un indice de fusion de moins de 5, et en outre dans laquelle la résine ionomère de la première couche est formée par (1) une température de réaction basse de 220 à 260°C, (2) une pression de réacteur élevée de 179,2 à 193,1 MPa (26 000 à 28 000 psi) ou (3) une combinaison de température de réaction basse de 220 à 260°C et de pression de réacteur élevée de 179,2 à 193,1 MPa (26 000 à 28 000 psi) ;
b. une seconde couche co-extrudée comprenant une résine ionomère, un copolymère acide d'éthylène, un terpolymère acide d'éthylène, ou un polyéthylène très basse densité catalysé par métallocène, et comprenant un ou plusieurs des éléments parmi des pigments, des colorants et des flocons ;
c. éventuellement une troisième couche adhésive en contact direct avec la seconde couche co-extrudée et comprenant un copolymère acide d'éthylène, un terpolymère acide d'éthylène, un copolymère d'éthylène ou un polyéthylène très basse densité catalysé au métallocène ; et
d. éventuellement une quatrième couche de support co-extrudée adhérant à la couche adhésive.

2. Feuille selon la revendication 1, dans laquelle la seconde couche comprend un copolymère acide d'éthylène, pouvant être traité avec la résine ionomère de la première couche et comprenant en outre un ou plusieurs éléments parmi les pigments, les colorants et les flocons.

3. Feuille selon la revendication 1 ou 2, dans laquelle la troisième couche comprend (1) une résine ionomère ; (2) un copolymère acide d'éthylène ; (3) un terpolymère acide d'éthylène ; ou (4) un polyéthylène très basse densité catalysé au métallocène.

4. Feuille selon la revendication 3, dans laquelle la première couche est une couche transparente et consiste essentiellement en une résine ionomère d'éthylène et 12 à 18% en poids, sur la base du poids de copolymère, d'acide méthacrylique ou 10 à 15% en poids, sur la base du poids du copolymère, d'acide acrylique et 35 à 75% neutralisés avec un ion métallique comprenant du zinc, du sodium, ou du magnésium ; la seconde couche est essentiellement constituée de ladite résine ionomère neutralisée avec des ions métalliques et contient un ou plusieurs éléments parmi les pigments, les colorants, les flocons ; la troisième couche comprend un polyéthylène très basse densité catalysé au métallocène adhérant à la couche de support ; et la quatrième couche comprend un copolymère statistique de polypropylène.

5. Produit comprenant ou produit à partir d'une feuille multicouches, dans lequel le produit comprend une pièce automobile, une pièce de camion, un panneau de carrosserie automobile ou de camion ou une pièce ou un panneau d'un véhicule de loisirs ayant une surface de classe A, **caractérisé par** un DOI d'au moins 80, comme défini dans la norme ASTM 284 et dans lequel la feuille est telle que revendiquée dans l'une quelconque des revendications précédentes.
